# EUROPEAN PATENT APPLICATION

(11) **EP 2 429 184 A1**
(43) Date of publication of application: **14.03.2012**
(21) Application number: 10176084.1
(22) Date of filing: 09.09.2010
(51) Int. Cl.: H04N 5/445

(54) **Television user interface and method for controlling a video system**

(71) Applicant: Advanced Digital Broadcast S.A., 1292 Chambesy (CH)
(72) Inventor: Bristow, Paul, 1292, Pregny-Chambesy (CH); Malan, Veronique, 1292, Pregny-Chambesy (CH)
(74) Representative: Dini, Roberto

(57) **Abstract**

It is disclosed a video system comprising a screen and a user interface for allowing a user to operate the video system. The user interface comprises a remote control comprising direction keys for allowing a user to select a direction on the screen and menu means for displaying menu options based on signals received from the remote control. Menu means is adapted to display the menu options on predetermined areas of the screen which are organized according to directions individuated by the direction keys on the remote control. Menu means is programmed to display menu options in one of the predetermined areas corresponding to the direction selected by the user by operating one of the direction keys on the remote control.

## Description

### TECHNICAL FIELD

The present invention relates to video systems, and in particular to interactive video systems which allow a user to navigate a menu for selecting between different viewing options.

### BACKGROUND ART

Nowadays video contents are provided to the user via a huge amount of video sources. Cable, satellite and broadcast TV provides for TV programs via different TV channels. Optical and magnetic supports (like CD, DVD, Blu-RAY and tapes), as well as mass memories (like hard disks and USB keys, Network storage) allows storing movies that can be reproduced by a reading device. The Internet is also a huge source of video information: a user can easily download movies or view TV programs that are transmitted in streaming by a web server.

In order to access to several of these video sources, the interactive video system shall comprise a plurality of signal reception and/or processing means (such as tuners, modems, decoders, descrambles, reading devices) that can be connected or integrated to a screen wherein the video is finally reproduced. In both cases, control of all the different video sources is complex because it requires the user to use different remote controls, or to navigate between complex menus that allow setting all the different options for viewing the video sources.

Complexity of controlling the interactive video system is particularly increased if the interactive video system allows an Internet connection for retrieving video contents. In this case the interactive video system comprises a web browser or a dedicated graphical user interface (GUI) which is not always easy to be used by old people.

Furthermore, interactive video systems are known which allow recording of video contents; as the functions of the interactive video system increase in number, the control of the whole video system gets more and more complex.

It is therefore felt the need for an improved user interface, in particular a graphical one, that allows a user to control in a more easy and intuitive way an interactive video system.

### SUMMARY OF THE INVENTION

In one aspect, the present invention is directed to a video system, and in particular to an interactive video system, which overcomes one, some or all of the drawbacks of prior-art devices and/or systems and/or techniques.

The present invention, in one or more embodiments, may provide an interactive video system comprising means for generating a video signal comprising a plurality of video frames (at least one of said plurality of video frames comprising a graphical user interface screen) to be displayed on a screen and a user interface for allowing a user to operate the interactive video system. By using a remote control comprising direction keys, the user selects a direction on the graphical user interface screen and menu options are automatically displayed. The menu options are organized in according to directions individuated by the direction keys on the remote control, so that when the user operates the direction keys (e.g. the up button), a set of menu options is displayed in an area of the screen (e.g. the top of the screen) associated to the direction selected by the user.

This solution allows a very intuitive navigation of the menu options for controlling the video system. The user does not have to look after a particular setting or option throughout the whole screen, options are displayed in a limited region of the screen which correspond to the direction selected by the user: if he operates the UP button, then the menu options will be displayed in the top portion of the screen, if he operates the LEFT button, then the menu options will be displayed on the left portion of the screen.

In one embodiment, the set of menu options that is displayed in response to the user command, moves in a direction opposite to the one selected by the user until it occupies the final position. In other word, if the user operates the UP button, the set of menu options appear to enter the screen from the top and moves down until it occupies the final position. If the user operates the LEFT button, the set of menu options moves from left to right until it stops in the final position. This movement of the menu options improves the ease of use of the video system since the spatial menu organisation reinforces the user's mental map of the entire system, making them feel in control of the system, despite its complex capabilities.

In order to improve ease of use of the video system, in one embodiment the remote control does not comprise numerical keys; in particular it comprises only direction keys and one or more function keys, in particular a menu key used to cause the user interface to display menu options. This solution allows reducing the complexity of remote control, which does not need to have a huge number of keys, in particular those normally used to select TV channels on a TV set. The use of the remote control is therefore easier for the user.

In one embodiment, when the menu is first activated, e.g. because the menu key has been operated, a first group of menu option is displayed in the middle of the screen. This group of menu options is organized according to the directions selectable by the user via the direction keys. As a preferred example, this first group of menu options can be organized as a cross shaped menu placed in the middle of the screen and with the menu options displayed on one or more arms of the cross. In this way, when the user activates the menu, he is displayed a menu whose shape is similar to the shape of the keys on the remote control, therefore he can navigate in a more easy way the menu options and can remember in a better way the paths for moving from an option to another since there's a visual association between what is displayed and the keys he presses.

In one embodiment, the video system is adapted to receive and display television programs transmitted on television channels. In order to operate the video system, the user is provided with a remote control without number keys but comprising direction keys and a menu key. In this embodiment the user interface is adapted to display a channel bar if one of the direction key is operated before the menu key is operated. The channel bar comprises a plurality of cells; each cell comprises at least a television channel name. In this way the user can select a television channel by scrolling the channel bar by means of the direction keys. Selection of the TV channels is therefore very intuitive since the user is displayed the TV channel name and preferably also program guide information.

In a further embodiment, the user interface comprises means for receiving and storing in a first memory area program guide information, in particular the title or category of the program transmitted by a TV channel. At the same time the user interface provides the user the possibility to provide the user interface with information that a given TV program is of interest; this information is stored in a second memory area. The user interface comprises a search engine adapted to search in the first memory area for TV programs of interest based on information stored in the second memory area. In this way the user interface can inform the user in case one or more program that could be of interest for the user are scheduled and will be transmitted on a received TV channel.

Notwithstanding the invention is described and illustrated herein with reference to a limited number of embodiments, it is understood that various combinations of the elements, decoders, reading devices, computers, computer server, circuital and logic blocks, other than those specifically illustrated, are contemplated and are within the scope of the present invention which is defined by the attached claims forming integral part of the present description.

### BRIEF DESCRIPTION OF THE DRAWINGS

The invention will be presented here below with reference to non limiting examples, provided for explicative and non limitative reasons in the annexed drawings. These drawings illustrate different aspects and embodiments of the present invention and, where appropriate, reference numerals illustrating like structures, components, materials and/or elements in different figures are indicated by similar reference numbers.
Figure 1 illustrates an interactive video system according to a first exemplary embodiment.
Figure 2 illustrates a block diagram of a TV set of the interactive video system of figure 1.
Figure 3 illustrates a flow diagram of a method for controlling an interactive video system.
Figure 4 illustrates the interactive video system of figure 1, wherein second level menu options are displayed.
Figure 5 illustrates the interactive video system of figure 1, wherein third level menu options are displayed.
Figures 6a-6b illustrate the interactive video system of figure 1, wherein second level menu options are displayed according to a second method.
Figures 7a-7b illustrate the interactive video system of figure 1, wherein a channel bar for selecting channel is displayed.

### DETAILED DESCRIPTION OF THE PREFERRED EMBODIMENTS

While the invention is susceptible of various modifications and alternative constructions, certain illustrated embodiments thereof have been shown in the drawings and will be described below in detail. It should be understood, however, that there is no intention to limit the invention to the specific form disclosed, but, on the contrary, the invention is to cover all modifications, alternative constructions, and equivalents falling within the spirit and scope of the invention as defined in the claims.

In the following description and in the figures, like elements are identified with like reference numerals. The use of "e.g.," "etc," and "or" indicates non-exclusive alternatives without limitation unless otherwise noted. The use of "including" means "including, but not limited to," unless otherwise noted.

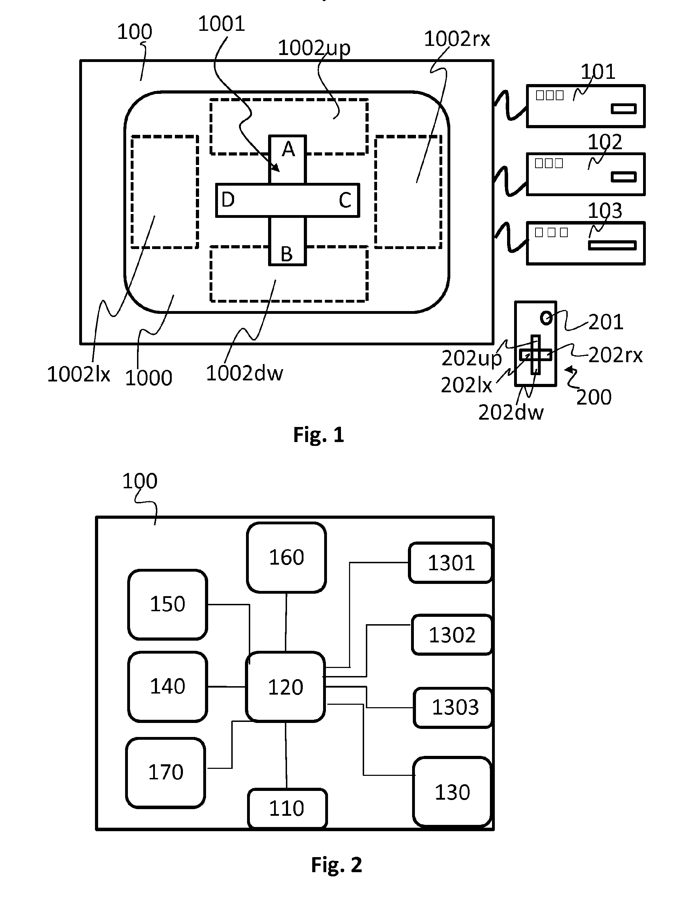

In Figure 1, disclosed is a video system, in particular an interactive video system, 1 that allows a user to view video contents.

Video system 1 comprises a TV set 100 adapted to receive and display analogue and digital, in particular DVB (Digital Video Broadcast), TV signals, a set-top-box 101 for receiving satellite television channels, a set-top-box 102 for receiving cable television signals and a DVD reader 103. Set-top-boxes 101 and 102 receive TV signals, decode them and provide the decoded signals (e.g. RGB signals) to the TV set 100; in this way a user can watch TV programs transmitted by the satellite or cable operators in relative TV channels. DVD reader 103 allows reading video content stored on DVDs and storing TV signals received from an external device like the TV set 100.

The embodiment of figure 1 is not limitative and the separate signal sources of 101, 102 and 103 may also be processed and output to the TV set 100 by a hybrid device, for example a cable-satellite set-top-box or a cable-IPTV set top box. More in general the interactive video system can comprise any device that is suitable to receive, decode, play, store or display television signals. As non limiting example, an interactive video system according to the invention can comprise a modem or an Ethernet card for connection to a computer network, in particular the Internet, so as to download digital movies or video contents. In another embodiment, the interactive video system can comprise a video-projector for projecting video contents on a screen.

Coming back to the example of figure 1, TV set 100 comprises an infrared receiver for receiving commands from a remote control 200 that is used by the user for controlling the interactive video system 1. Figure 2 shows a block scheme of the TV set 100.

Commands transmitted by the remote control 200 are received by the receiver 110 and provided to a microcontroller 120 that controls the internal tuner 130 or the external devices 101, 102 and 103 via communication ports 1301, 1302 and 1303, e.g. SCART connections.

In order to control the interactive video system, the TV set is provided with a user interface that comprises hardware and software means for allowing human-machine interaction.

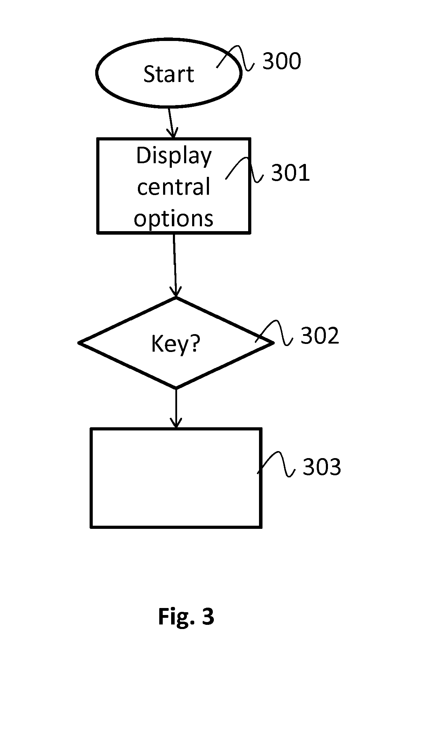

The TV set 100 comprises a memory area 140 storing a software program adapted to implement the method for controlling interactive video systems described in the following with reference to the block diagram of figure 3.

TV set 100 also comprises means 170 for generating and outputting a video signal comprising a plurality of video frames comprising graphical user interface screens and/or images of a video content (e.g. received via devices 101 or 102 or 103) to be displayed. In the following description the term "graphic user interface screen" is used to indicate the set of images and text generated by a GUI for displaying at the same time on the screen (e.g. text and images comprised in the same frame).

The method starts at step 300, when the user operates a menu key 201 on the remote control 200 to indicate the desire to start a menu for controlling the interactive video system 1.

Microcontroller 120 receives the user inputs and runs the software program stored in memory area 140; a group of menu options are then displayed (step 301) on the screen 1000 of the TV set 100. This group of menu options is organized according to the directions that are selectable on the remote control by means of direction keys.

In the embodiment of figure 1, remote control 200 comprises four direction keys 202up, 202dw, 202rx and 202lx which are organized according to a cross to allow a user to intuitively select four different directions: up (key 202up), down (key 202dw), right (key 202rx), left (key 202lx). The menu options displayed at step 301 are therefore organized according to a cross shaped menu as can be seen in figure 1, wherein the menu 1001 has the shape of a cross with the menu options A, B, C and D placed on the arms of the cross. Menu options A, B, C and D can be, as non limiting example, "Settings", "Sources", "TV guide" and "Return".

At step 302 the method provides for waiting for the user selection of one of the four options; selection of an option is made by operating the direction key associated to the option, e.g. if the user operates key 202up that indicates the direction 'UP', the microcontroller 120 will interpret the commands as the user has selected option A and will therefore proceed by displaying a second group of options in a predetermined area of the TV screen (step 303).

In the preferred embodiment, the user interface is programmed for displaying the second group of menu options according to directions that the user can select via the direction keys. In the embodiment of figure 1, when one of options A, B, C and D is selected, the new menu options are displayed respectively in one of the four predetermined areas 1002up, 1002dw, 1002rx, 1002lx placed at the four side of the screen, i.e. in an area corresponding to the side that, starting from the middle of the screen, crosses the direction selected by the user.

As can be seen from the embodiment of figure 1, direction keys 202up, 202dw, 202rx and 202lx are organized on the remote control according to relative spatial relationships, and the predetermined areas 1002up, 1002dw, 1002rx, 1002lx are characterized by the same spatial relationships. The same principle can be applied to remote control with a different number of direction keys.

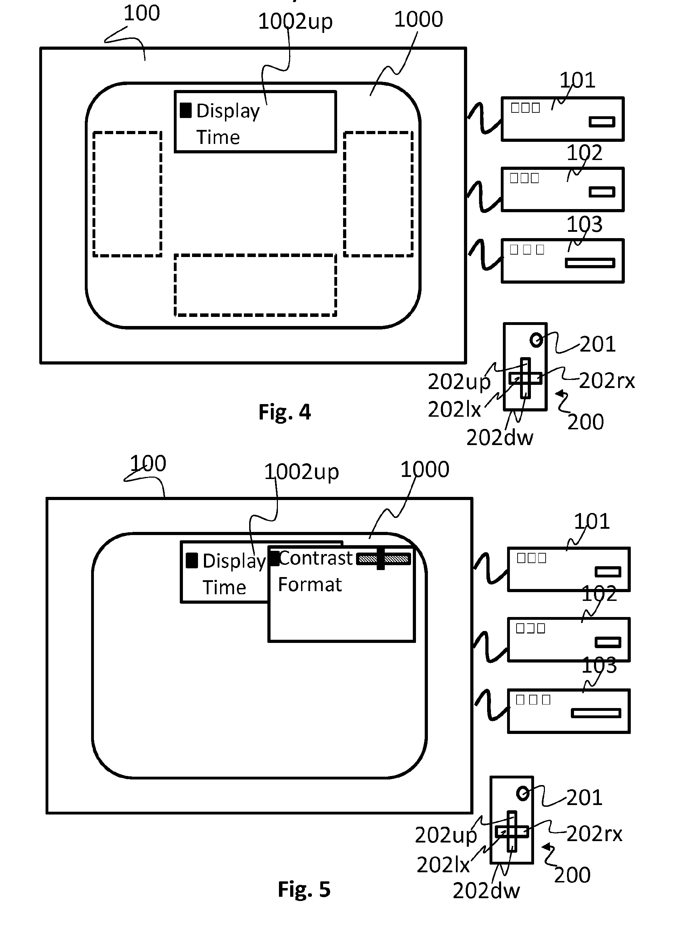

Figure 4 shows the video system 1 once the user has operated key 220up and thus selected the option "Settings": the menu options "Display" and "Time" are displayed.

The user now can select one of these menu options by moving up and down a prompt by means of the direction keys 202up and 202dw. Then by using the right or left direction key (202rx and 202lx) the user is displayed with other menu options that, at this level, are displayed as a list of third level menu options aligned to the previously selected option as shown in figure 5, wherein the result of the selection "Display" is shown.

By using the direction keys on the remote control, the user can then navigate the menu. In one embodiment, the menu key is used for entering a selection.

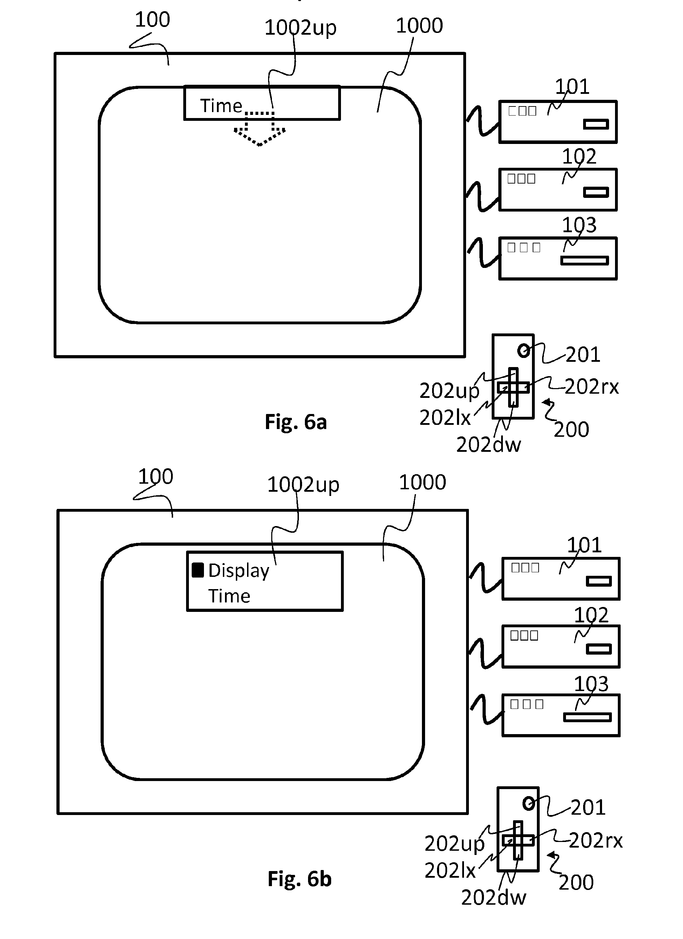

In one embodiment, the method for controlling the video system provides for moving groups of menu options on the screen; in particular menu options are moved so as to provide the impression to the user that the menu options are moving into the screen coming from a direction opposite to the one selected by the user by means of a direction key. Figure 6a-6b shows different pictures of the screen 1000 after the user has selected option 'A' from the first level of menu options. In figure 6a the menu options "Display" and "Time" are moved into the screen from the top to the final position which correspond to area 1001 placed just below the top side of the screen. Figure 6a shows the second level options entering the screen; the arrow in dashed line indicates the moving direction. Figure 6b shows the second level options in the final position.

In the embodiment above described, the remote control comprises only direction keys and a menu key which is used to activate the menu, no keys with numbers are provided on the remote control.

In order to allow the user to select between different TV channels, the user interface provides for displaying a TV channel bar if the user operates one of direction keys 202up, 202dw, 202rx and 202lx before the menu key has been operated.

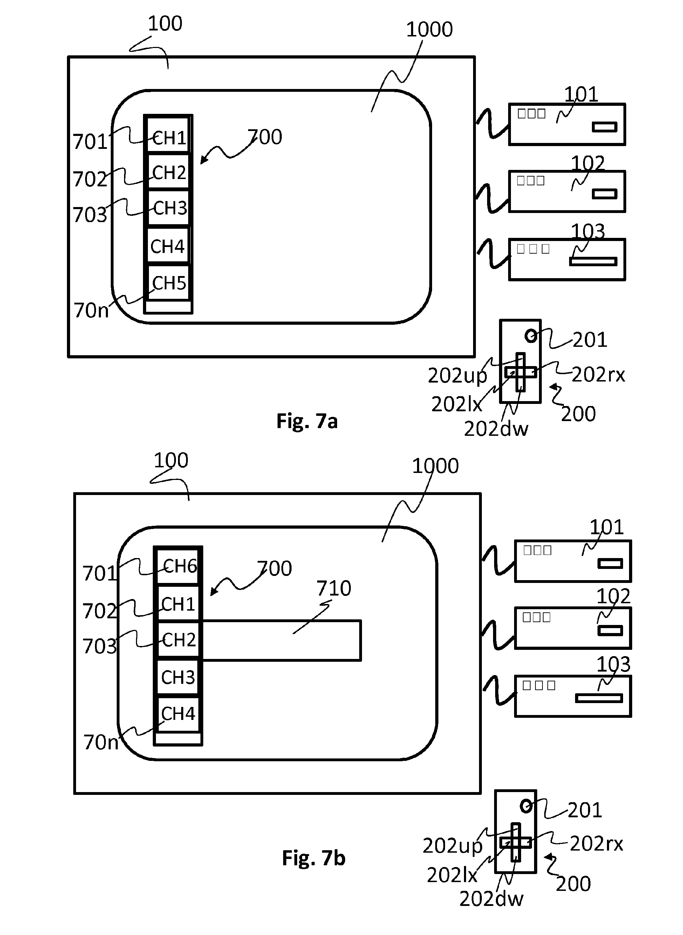

An example of the channel bar is shown in figure 7. The channel bar 700 comprises a plurality of cells 701, 702, 703...70n each of which comprises at least a TV channel name; a channel number or any other television channel feature may also be presented. In the preferred embodiment the cell in the middle of the bar (or equally another predetermined cell of the bar) is highlighted so as to indicate the current channel being displayed. By scrolling the bar by means of the up and down direction keys 202up and 202dw, the user change the TV channels in the cells, as can be understood by comparing figures 7a and 7b, wherein the channels have been moved of one position, e.g. channel CH2 has been moved from cell 702 to cell 703.

If the user wants to change channel, by operating the menu key the video system is controlled to tune on the TV channel which is present in cell 703.

In one embodiment, the video system is adapted to retrieve program guide information (e.g. title, scheduling time, description of TV programs, trailer, etc...) from at least one source. Program guide information can be retrieved on the Internet or received with the TV signals broadcasted or received via any other source (like cable, satellite or terrestrial), and can be organized in a program guide table that can be displayed and navigated by the user.

Program guide information is stored in a memory area 150 of the TV set.

In one embodiment, shown in figure 7b, when the user operates a direction key, in the embodiment of figure 7b key 202lx, a text cell 710 is displayed containing several program guide information, in particular the description of the TV program. In one embodiment, in a portion of cell 710 the video system plays a trailer of the TV program.

In one embodiment, the user interface allows the user to record TV programs in a memory area of the DVD reader 103 or in any other memory area of suitable dimensions. Such a memory area can be internal or external to the TV set.

In one embodiment, when the user requests recording of a TV program, the interactive user interface stores in a memory area 160 some program guide information related to the TV program to be recorded.

Memory area 160 is therefore dedicated to store data relative to TV programs that are considered of interest for the user.

Preferably the user interface is programmed for providing the user the possibility to provide an explicit preference for indicating if a TV program is of interest. As an example, cell 710 can be configured to comprise a push bottom "LIKE" that can be selected by the user using the direction keys and the menu key used as enter key. When the user indicates that a program is of interest, then the relative program guide information is stored in memory area 160.

In one embodiment, the user interface comprises a search engine that compares fresh program guide information received from an external source with data stored in memory area 160. In this way the user interface individuates TV programs (currently broadcasted or scheduled for broadcasting) that can be of interest for the user and can provide relative information to the user. In one embodiment, the search engine can be activated by the user by interacting with the user interface. In another embodiment the search engine is automatically activated by the video system in order to retrieve TV programs over the Internet or to organize information to be presented to the user.

The purpose of the Abstract is to enable the public, and especially the scientists, engineers, and practitioners in the art who are not familiar with patent or legal terms or phraseology, to determine quickly from a cursory inspection, the nature and essence of the technical disclosure of the application. The Abstract is neither intended to define the invention of the application, which is measured by the claims, nor is it intended to be limiting as to the scope of the invention in any way.

Still other features and advantages of the claimed invention will become readily apparent to those skilled in this art from the above detailed description describing preferred embodiments of the invention, simply by way of illustration of the best mode contemplated by carrying out the invention. As it can readily be realized, the invention is capable of modification in various obvious respects all without departing from the invention. Accordingly, the drawings and description of the preferred embodiments are to be regarded as illustrative in nature, and not as restrictive in nature and various changes may be made without departing from the scope of the invention as defined by the following claims.

As an example, the direction keys can be in a number different from four (e.g. they can be eight so as to allow the user to select also diagonal directions) and they can be organized in different ways, e.g. to indicate diagonal directions instead of horizontal and vertical directions (horizontal and vertical being considered with respect to the normal orientation of the screen). They may also simply be indications of direction, for example, an analogue joystick, or a touch screen interface using a finger wipe in an appropriate direction. If implemented on a personal computer, it may be moving the mouse in the appropriate direction.

Moreover for the purpose of the present invention, the electronic elements, blocks and devices can be in anyway incorporated, connected or integrated in order to implement the feature of the interactive video system described above. As an example, in the embodiments above described the interactive user interface was implemented within the TV set, nevertheless, the same control of an interactive video system can be obtained by implementing the interactive user interface within a set-top-box (e.g. one decoding DVB or satellite TV signals) or a computer connected to a screen or a TV set of the video system to be controlled.

In case the user interface is implemented within a set-top-box or a computer that do not integrate a screen, the set-top-box or the computer shall be able to generate video frames which, once displayed on a screen, reproduce the same picture/frame shown in the figures above described; such frames therefore comprise images of a graphical user interface screen. The invention is therefore directed to an interactive video system comprising a user interface for allowing a user to operate the interactive video system. The interactive video system comprises means for generating a video signal comprising a plurality of video frames, at least one of said plurality of video frames comprising a graphical user interface screen. The user interface comprises a remote control comprising direction keys for allowing a user to select a direction on the graphical user interface screen, receiving means for receiving a signal corresponding to the direction selected by the user, and menu means operatively connected to said receiving means for displaying menu options based on the signal received from the remote control, said receiving means being adapted to display the menu options on predetermined areas of said graphical user interface screen, so that said user interface allows the user to navigate said menu options by operating the direction keys of the remote control. Said predetermined areas are organized according to directions individuated by said direction keys on the remote control. Said menu means are programmed to display menu options in one of said predetermined areas corresponding to the direction selected by the user by operating one of the direction keys on the remote control.

The invention is also directed to a computer program product comprising code portions stored on a computer readable medium; said code portions being such that, once run by a computer, allow implementation of a method for controlling a video system as described in the above description.

## Claims

1. An interactive video system (1) comprising a user interface for allowing a user to operate the interactive video system (1), wherein the interactive video system (1) comprises means for generating a video signal comprising a plurality of video frames to be displayed on a screen, wherein at least one of said plurality of video frames comprises a graphical user interface screen, and wherein the user interface comprises
a remote control (200) comprising direction keys (202up,202dw,202rx,202lx) for allowing a user to select a direction on the graphical user interface screen,
receiving means for receiving a signal corresponding to the direction selected by the user, and
menu means (120,140) operatively connected to said receiving means for displaying menu options based on the signal received from the remote control, said receiving means being adapted to display the menu options on predetermined areas (1002up, 1002dw,1002rx,1002lx) of said graphical user interface screen,
so that said user interface allows the user to navigate said menu options by operating the direction keys of the remote control (200),
**characterized in that**
said predetermined areas (1002up, 1002dw,1002rx,1002lx) are organized according to directions individuated by said direction keys (202up,202dw,202rx,202lx) on the remote control (200), and **in that**
said menu means are programmed to display menu options in one of said predetermined areas corresponding to the direction selected by the user by operating one of the direction keys on the remote control.

2. The video system of claim 1, wherein said direction keys are organized on the remote control according to relative spatial relationships, and wherein said predetermined areas are **characterized by** the same spatial relationships.

3. The video system of claim 1 or 2, wherein said menu means are adapted to display one or more menu options that moves on the screen, said menu options moving into said one predetermined area in a direction opposite to the one selected by the user.

4. The video system according to claim 1 or 2 or 3, wherein said remote control does not comprise numerical keys.

5. The video system of claim 1 or 2 or 3 or 4, wherein said remote control comprises only direction keys and one or more function keys, said function keys allowing the user to request a function of the video system to be activated.

6. The video system of claim 5, wherein one of said function keys is a menu key and wherein said menu means are adapted to display a group of menu option organized in the middle of the screen when said menu key is operated, the menu options of said group of menu options being organized according to the directions selectable by the user via the direction keys.

7. The video system of claim 6, wherein said menu means are adapted to display a cross shaped menu in the middle of the screen when said menu key is operated, and wherein the menu options of said group of menu options are displayed on one or more arms of said cross shaped menu.

8. The video system of claim 6 or 7 or 8, wherein said video system is adapted to receive and display television programs transmitted on television channels, wherein one of said function keys is a menu key adapted to cause the menu means to display menu options, wherein said menu means are adapted to display a channel bar if one of said direction key is operated before the menu key is operated, said channel bar comprising a plurality of cells, each cell comprising at least a television channel number and a television channel name, the user interface allowing the user to select a television channel by scrolling the channel bar by operating the direction keys.

9. The method of claim 1 or 2 or 3 or 4 or 5 or 6 or 7 or 8, wherein said user interface comprises means for receiving and storing in a first memory area program guide information, in particular the title or category of the program transmitted by a TV channel, wherein said menu options comprise an option allowing a user to provide the user interface a first information that a TV program is of interest, said user interface being adapted to store in a second memory area program guide information on the TV program of interest, and wherein said user interface comprises a search engine adapted to search in said first memory area for TV programs of interest, said search being based on information stored in said second memory area.

10. A method for controlling an interactive video system, wherein
a user controls the video system by navigating a menu displayed on a screen of the video system by means of direction keys provided on a remote control, and wherein menu options are displayed in predetermined areas of the screen in response to user inputs on the remote control,
the method being **characterized in that** said predetermined areas are organized according to directions individuated by said direction keys, and **in that** menu options are displayed in one of said predetermined areas corresponding to the direction selected by the user.

11. The method according to claim 10, wherein said direction keys are organized on the remote control according to relative spatial relationships, and wherein said predetermined areas are **characterized by** the same spatial relationships.

12. The method according to any of claims 10 to 11, comprising the steps of
- monitoring interaction of the user with the video system so as to individuate TV programs that can be of interest of the user,
- storing first program guide information of television programs that can be of interest of the user,
- receiving second program guide information
- comparing first and second program guide information in order to find TV programs that are currently transmitted by or that are scheduled by received TV channels.

13. The method according to any of claims 10 to 12, wherein the remote controls does not comprise keys with numbers and wherein the method further comprises the steps of
displaying a channel bar comprising a plurality of cells, each cell of said plurality comprising at least a television channel name,
scrolling the channel bar by means of said direction keys
selecting one cell of said plurality,
tuning on the television channel associated to the cell

14. A computer program product comprising code portions stored on a computer readable medium, said code portions are such that, once run by a computer, allow implementation of a method according to any of claims from 10 to 13.

15. A computer unit comprising means for implementing a method according to any of claims 10 to 14.
